# FASCICULE DE BREVET EUROPEEN

(11) **EP 3 688 932 B1**
(45) Date de publication et mention de la délivrance du brevet: **29.10.2025**
(21) Numéro de dépôt: 18783548.3
(22) Date de dépôt: 13.09.2018
(51) Int. Cl.: H04L 41/5051, H04L 41/40, G06F 8/60

(54) **PROCÉDÉ ET DISPOSITIF DE TRAITEMENT D'UNE REQUÊTE D'INSTANCIATION D'UN SERVICE RÉSEAU**
VERFAHREN UND VORRICHTUNG ZUM FÜHREN NETZWERKDIENSTE INSTANZIIERUNGANFORDERUNGEN
METHOD AND APPARATUS FOR HANDLING NETWORK SERVICES INSTANTIATION REQUESTS

(30) Priorité: 29.09.2017 FR 1759054
(43) Date de publication de la demande: 05.08.2020
(73) Titulaire: Orange, 92130 Issy-les-Moulineaux (FR)
(72) Inventeur: CHATRAS, Bruno, 92326 Châtillon Cedex (FR); FOUQUART, Philippe, 92326 Châtillon Cedex (FR)
(74) Mandataire: Vidon Brevets & Stratégie
(86) Numéro de dépôt international: PCT/FR2018/052242
(87) Numéro de publication internationale: WO 2019/063907

(56) Documents cités:
- WO-A1-2017/035735
- US-A1- 2016 212 016
- US-A1- 2017 006 083
- MAURIZIO GIORDANO ED - PETERM A SLOOT ET AL: "DNS-Based Discovery System in Service Oriented Programming", 29 June 2005, ADVANCES IN GRID COMPUTING - EGC 2005; [LECTURE NOTES IN COMPUTER SCIENCE;;LNCS], SPRINGER-VERLAG, BERLIN/HEIDELBERG, PAGE(S) 840 - 850, ISBN: 978-3-540-26918-2, XP019012052
- DEVLIC ALISA ET AL: "NESMO: Network slicing management and orchestration framework", 2017 IEEE INTERNATIONAL CONFERENCE ON COMMUNICATIONS WORKSHOPS (ICC WORKSHOPS), IEEE, 21 May 2017 (2017-05-21), pages 1202 - 1208, XP033111657, DOI: 10.1109/ICCW.2017.7962822

## Description

### 1. Domaine de l'invention

L'invention concerne les réseaux de télécommunication, et plus particulièrement les réseaux mettant en œuvre un mécanisme de virtualisation des fonctions des réseaux.

### 2. Art Antérieur

Les réseaux de télécommunication sont constitués de multiples équipements ayant chacun une fonction bien particulière (routeurs, commutateurs, serveurs, etc..). Pour la majorité, ces fonctions sont aujourd'hui indissociables de l'équipement qui les héberge, le couple "équipement/fonction" étant vendu comme un produit intégré par les équipementiers du secteur.

La virtualisation des fonctions des réseaux (NFV pour Network Functions Virtualization en anglais) vise à briser ce couplage, en appliquant les principes de l'informatique en nuage (cloud computing en anglais). Les logiciels mettant en œuvre les fonctions des réseaux sont alors achetés indépendamment par un opérateur de réseau puis installés sur des serveurs informatiques banalisés, regroupés en vastes pools répartis sur un petit nombre de sites géographiques.

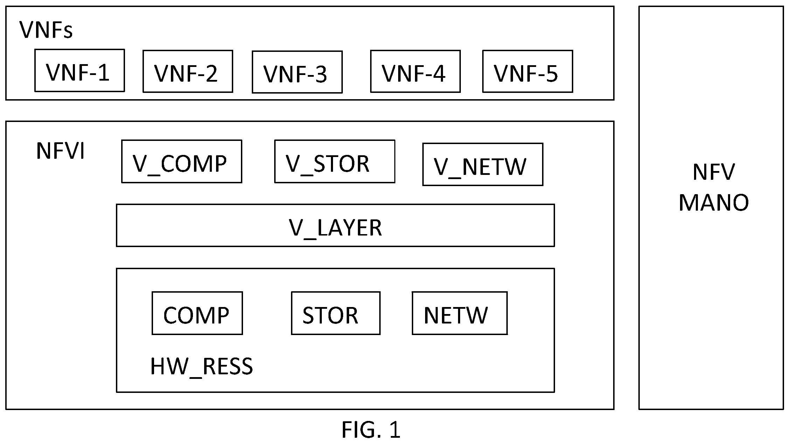

Le cadre architectural de référence spécifié par l'ETSI (pour European Telecommunications Standards Institute en anglais) identifie trois blocs fonctionnels constituant un système NFV, dont un exemple est illustré en figure 1 :
- Les fonctions réseau virtualisées (VNF pour Virtual Network Function en anglais), VNF-1 à VNF-5 sur la figure 1,
- L'infrastructure (NFVI pour Network Functions Virtualization Infrastructure en anglais) fournissant les ressources (HW-RESS sur la figure 1) permettant à ces fonctions de s'exécuter et communiquer entre elles
- Les fonctions de gestion et d'orchestration (MANO pour MANagement and Orchestration en anglais) qui assurent l'association dynamique des ressources aux fonctions virtualisées.

L'infrastructure est constituée de pools de serveurs de grande capacité, offrant des ressources de calcul (COMP sur la figure 1), de stockage (STOR sur la figure 1) et de communication (NETW sur la figure 1). Ces ressources sont partitionnées par une couche logicielle spécifique (typiquement un hyperviseur, V_LAYER sur la figure 1), chaque partition (par exemple une machine virtuelle dans le cas d'un hyperviseur) hébergeant le logiciel d'une fonction réseau ou d'une partie de celle-ci et utilisant des ressources virtualisées (V_COMP, V_STOR, V_NETW sur la figure 1). Les machines virtuelles communiquent entre elles par des réseaux virtuels qui sont eux-mêmes des partitions du réseau physique de l'infrastructure.

Les fonctions de gestion et d'orchestration sont le cerveau d'un système NFV. Elles prennent en charge le cycle de vie des fonctions virtualisées, de leur instanciation à leur suppression, en passant par les changements d'échelle. Le comportement de telles fonctions virtualisées VNF est piloté par une série de descripteurs contenant les caractéristiques des fonctions réseau à déployer et les instructions nécessaires à leur assemblage pour former un service réseau cohérent.

Ainsi, un descripteur de fonction réseau virtualisées (aussi appelé VNFD) est un fichier fourni par le vendeur de la fonction virtualisée VNF, permettant de déterminer les ressources nécessaires pour déployer une telle fonction virtualisée. Par exemple, le fichier fournit le nombre de machines virtuelles nécessaires, le type de connectivité interne et externe à utiliser. Le fichier fournit également des contraintes à respecter pour déployer la fonction virtualisée, par exemple: ne pas déployer deux composants ou deux instances de la même fonction sur un même serveur physique pour des raisons de fiabilité ou au contraire déployer deux composants ou deux instances de la même fonction sur un même serveur physique pour des raisons de performance.

Ce descripteur de fonction réseau virtualisées VNFD est inclus dans un fichier archive appelé « VNF package » qui contient également les logiciels à installer. Ce fichier archive une fois obtenu après du fournisseur de VNF est stocké au niveau d'une entité appelé NFV Orchestrateur (NFVO pour Network Functions Virtualization Orchestrator en anglais). Une entité appelée VNF Manager (VNFM pour Virtual Network Functions Manager en anglais) peut alors télécharger un tel descripteur VNFD. Les entités NFVO et VNFM sont des équipements ou modules logiciels assurant les fonctions de gestion et d'orchestration (MANO) du système NFV. L'entité VNFM a pour fonction d'instancier des fonctions réseau virtualisées VNF, de mettre à l'échelle ou mettre à jour des fonctions réseau virtualisées VNF, ou encore supprimer des fonctions réseau virtualisées VNF. Une telle entité est en charge de la gestion du cycle de vie de fonctions réseau virtualisées VNF, sous le contrôle de l'orchestrateur NFVO.

En général, un service réseau nécessite l'instanciation d'un ensemble de fonctions réseau virtualisées (VNF) et/ou de services réseau imbriqués (appelés Nested NS pour Nested Network Service en anglais). Un descripteur de service réseau (NSD) est alors défini. Un tel descripteur de service réseau NSD est un fichier, en général rempli par l'opérateur lui-même, permettant de décrire un assemblage de fonctions virtualisées ou non.

Par la suite, on appelle objet aussi bien une fonction réseau virtualisée (VNF), ou bien un service réseau imbriqué (Nested NS).

Un descripteur de service réseau contient des références aux descripteurs des objets à instancier pour instancier le service réseau cible. Il s'agit en particulier de références à des descripteurs de fonctions réseau virtualisées (VNFs) et des descripteurs d'autres services réseaux imbriqués (Nested NS). Le fichier NSD est typiquement stocké au niveau du NFVO et contient des identifiants de descripteur VNFD qui serviront de base pour instancier les fonctions réseau virtualisées VNFs requises.

Dans l'architecture ETSI NFV, le contenu d'un descripteur de service réseau NSD est exploité par l'entité appelée NFV Orchestrateur (NFVO) pour instancier un service réseau complet. Le contenu d'un descripteur VNFD, quant à lui, est utilisé par l'entité appelée VNF Manager (VNFM) pour instancier une fonction réseau virtualisée VNF sur instruction de l'entité NFVO.

Selon les spécifications ETSI, les références incluses dans un descripteur de service réseau NSD permettent d'identifier de manière unique un descripteur d'objet mais pas de déterminer où ce descripteur d'objet se trouve.

On suppose en effet que l'entité NFVO dispose de toutes les informations nécessaires pour instancier un service réseau à partir d'un descripteur NSD donné. En particulier, on suppose que les VNF Packages (paquets VNF en français) et les descripteurs NSD correspondants aux fonctions réseau virtualisée VNF ou aux services réseau imbriqués Nested NS à instancier sont disponibles localement au niveau de l'entité NFVO sur laquelle le descripteur de service réseau NSD cible a été chargé (*on-boarded en anglais*)*.* Ceci suppose donc que ces descripteurs et paquets aient été chargées (On-boarded) au préalable sur l'entité NFVO.

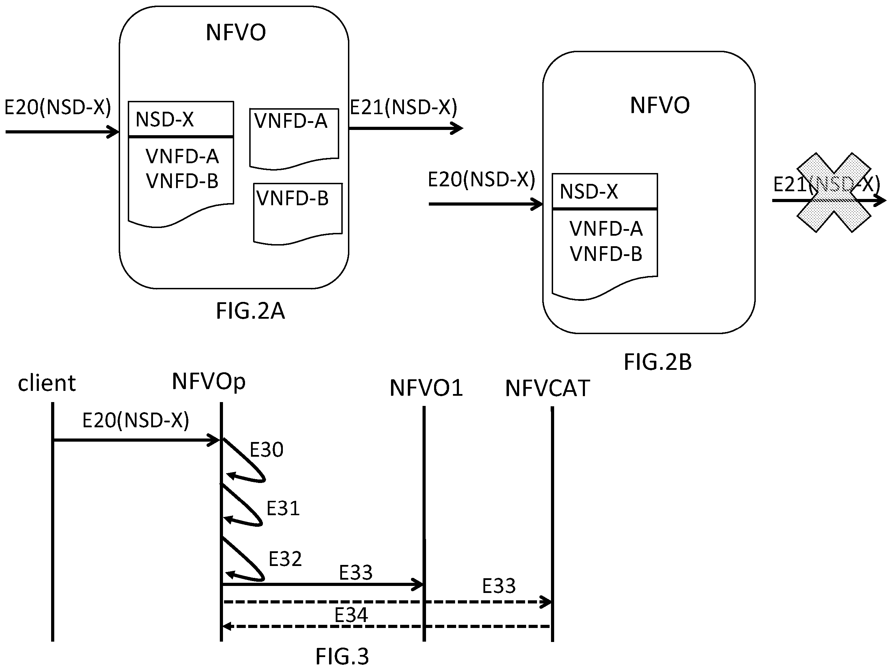

Ainsi, tel qu'illustré en figure 2A, si un descripteur de service réseau NSD-X référence les descripteurs de fonction réseau virtualisée VNFD-A et VNFD-B, une demande d'instanciation de service réseau reçu par l'orchestrateur NFVO (étape E20) sur la base du descripteur NSD-X n'est réalisable que si le descripteur NSD-X ainsi que les paquets VNF contenant les descripteurs VNFD-A et VNFD-B ont été préalablement transmis à l'entité NFVO qui reçoit la demande d'instanciation de service réseau. Dans ce cas, l'orchestrateur NVFO peut alors traiter la demande d'instanciation du service réseau (étape E21 (NSD-X)).

La disponibilité des paquets VNF correspondant aux descripteurs VNFDs référencés par un descripteur NSD est supposée garantie par une coordination a priori entre entités et acteurs. Les mécanismes actuels ne permettant pas de gérer le cas où un descripteur VNFD n'est pas disponible au niveau de l'entité NFVO.

Ainsi, tel qu'illustré en figure 2B, lorsqu'un descripteur VNFD (ici VNFD-A et VNFD-B) n'est pas disponible au niveau de l'entité NFVO, lorsqu'une demande d'instanciation (E20) d'un service réseau correspondant à un descripteur NSD (NSD-X de la figure 2B) référençant des descripteurs VNFD (ici VNFD-A et VNFD-B sur la figure 2B) non connus de l'entité NFVO ayant reçue la demande d'instanciation, le service réseau ne sera alors pas instancié et la demande d'instanciation sera rejetée.

Le document WO2017/035735A1 décrit une méthode pour déployer des services réseau dans laquelle certains fonctions réseau virtualisées doivent être déployées sur un domaine réseau distinct du domaine réseau géré par l'entité d'orchestration NFVO ayant reçue une requête d'instanciation d'un service réseau.

Le document US2017006083 A1 décrit une méthode pour charger des paquets VNF (on-boarding VNF packages) dans un système NFV.

Le document US2016212016 A1 décrit une méthode de gestion et d'orchestration de fonctions réseau virtualisées dans laquelle un graphe de transfert ("forwarding graph") de fonctions NFV est généré.

Le document Devlic Alisa et Al.: "NESMO: Network slicing management and orchestration framework", 2017 IEEE International Conference on communications Workshops concerne un système de gestion et d'orchestration d'un réseau découpé (network slicing).

Il existe donc un besoin d'améliorer l'état de la technique.

### 3. Exposé de l'invention

L'invention concerne un procédé de traitement d'une requête d'instanciation d'un service réseau reçue par une entité d'orchestration mettant en oeuvre tout ou partie d'un service de fonctions réseau virtualisées. Un descripteur du service réseau comprend au moins une référence à un objet à déployer pour instancier ledit service réseau.

Avantageusement, lorsque le descripteur de l'objet n'est pas disponible au niveau de l'entité d'orchestration, celle-ci obtient, à partir du descripteur du service réseau une information permettant d'identifier au moins une entité cible configurée pour instancier ledit objet sur instruction de l'entité d'orchestration ou pour transmettre le descripteur dudit objet à l'entité d'orchestration. Puis, l'entité d'orchestration transmet à une desdites au moins une entité cible une demande d'instanciation dudit objet ou une demande de récupération d'un fichier comprenant ledit descripteur dudit objet.

Ainsi, l'entité NFVO est capable d'identifier une entité cible à laquelle l'entité NFVO peut s'adresser pour instancier l'objet ou bien pour récupérer l'objet.

Par objet, on entend ici aussi bien une fonction réseau virtualisée (VNF) ou un service réseau imbriqué (Nested NS) nécessaire à l'instanciation du service réseau demandée. Par instanciation d'un service réseau, on entend ici notamment le déploiement du service réseau, sur requête d'un client par exemple.

Par client, on entend ici un module logiciel, par exemple un module logiciel d'une API (pour Application Programming Interface en anglais), une fonction applicative ou encore un terminal. Dans l'exemple décrit ici, le client peut être un module logiciel du système d'information d'un opérateur fournissant le service réseau. Un tel module logiciel est par exemple compris dans un portail client permettant à des utilisateurs ou à un autre opérateur de demander le déploiement d'un service, par exemple un service réseau.

Avantageusement, selon l'invention, la syntaxe d'un descripteur de service réseau NSD est modifiée afin d'ajouter une information permettant d'accéder à un descripteur d'un objet d'un service réseau à déployer.

Grâce à l'invention, lorsque l'entité d'orchestration NFVO ne dispose pas des descripteurs des objets nécessaires au déploiement du service réseau, de tels descripteurs peuvent être obtenus de l'entité cible de sorte que l'entité d'orchestration NFVO instancie elle-même l'objet, ou bien l'entité d'orchestration NFVO envoie une demande d'instanciation à l'entité cible de sorte que l'objet soit instancié par l'entité cible.

Selon l'art antérieur, lorsque l'entité d'orchestration NFVO ne dispose pas des descripteurs des objets nécessaires au déploiement du service réseau, la demande d'instanciation d'un service réseau est rejetée. Au contraire, selon l'invention, lorsque l'entité d'orchestration NFVO ne dispose pas des descripteurs des objets nécessaires au déploiement du service réseau, la demande d'instanciation d'un service réseau est traitée et le service réseau demandé par le client peut être déployé.

L'entité cible peut être un orchestrateur secondaire, i.e. un orchestrateur chargé d'instancier des fonctions réseau virtualisées (VNFs) ou des services réseau imbriqués (Nested NS). Un tel orchestrateur secondaire peut être une entité NFVO, ou une entité de gestion VNFM.

Lorsque l'entité d'orchestration NFVO récupère un fichier comprenant le descripteur de l'objet, un tel fichier peut comprendre seulement le descripteur de l'objet ou bien le fichier peut être un fichier archive (par exemple un VNF package selon la terminologie ETSI) comprenant notamment le descripteur de l'objet.

Avantageusement, selon l'invention, l'entité d'orchestration peut identifier plusieurs entités cibles auprès desquelles le descripteur de l'objet est disponible. L'entité d'orchestration peut alors sélectionner une des entités cibles identifiées, par exemple, en considérant la charge de chacune des entités cibles et en optimisant la répartition des charges.

Selon un mode particulier de réalisation de l'invention, ladite information comprend un identifiant du descripteur de l'objet et un identifiant de l'entité cible sur laquelle le descripteur de l'objet est stocké.

Selon un autre mode particulier de réalisation de l'invention, ladite information comprend un identifiant du descripteur de l'objet et un identifiant d'un domaine de fonctions de réseaux virtualisées sur lequel ladite entité cible se trouve.

Ce mode particulier de réalisation de l'invention procure l'avantage que le client requérant l'instanciation du service réseau n'a pas besoin d'avoir connaissance de la structure du domaine du fournisseur du service réseau. Le client n'a ainsi pas besoin de connaître les identités des orchestrateurs et/ou serveurs d'hébergement ou de référencement. La requête d'instanciation d'un service réseau pour le client est ainsi plus simple pour le client et la gestion d'un descripteur de service réseau par le fournisseur est également simplifiée.

Selon une variante de ce mode particulier de réalisation de l'invention, le procédé comprend en outre:
- l'envoi d'une requête d'interrogation, par l'entité d'orchestration, à un serveur de nom du domaine de fonctions de réseaux virtualisées, sur un service de virtualisation de fonctions réseau, ledit domaine de fonctions de réseaux virtualisées étant le domaine identifié dans le descripteur de service réseau,
- la réception d'au moins une réponse comprenant un identifiant d'une entité cible configurée pour instancier ledit objet sur instruction de l'entité d'orchestration ou pour transmettre le descripteur dudit objet à l'entité d'orchestration.

En variante, la requête d'interrogation peut comprendre l'identifiant du descripteur d'objet.

L'invention concerne également un dispositif d'orchestration configuré pour mettre en œuvre tout ou partie d'un service de fonctions réseau virtualisées. Le dispositif d'orchestration comprend un récepteur d'une requête d'instanciation d'un service réseau, et une mémoire mémorisant un descripteur dudit service réseau, ledit descripteur du service réseau comprenant au moins une référence à un objet à déployer pour instancier ledit service réseau par une entité d'orchestration. Le dispositif d'orchestration comprend une unité de traitement configurée pour:
- lorsque ledit descripteur de l'objet n'est pas disponible au niveau de l'entité d'orchestration, obtenir, à partir du descripteur du service réseau, une information permettant d'identifier au moins une entité cible configurée pour instancier ledit objet sur instruction de l'entité d'orchestration ou transmettre le descripteur dudit objet à l'entité d'orchestration,
- et transmettre à une desdites au moins une entité cible une demande d'instanciation dudit objet ou une demande de récupération du descripteur dudit objet.

L'invention concerne également un serveur de résolution de nom, comprenant une mémoire mémorisant au moins un enregistrement associant un identifiant d'un domaine de fonctions de réseaux virtualisées à au moins une entité cible du domaine de fonctions de réseaux virtualisées, ladite entité cible étant configurée pour instancier un objet d'un service réseau sur instruction d'une entité d'orchestration ou transmettre un descripteur dudit objet à l'entité d'orchestration.

Selon un mode particulier de réalisation de l'invention, ledit au moins un enregistrement est de type SRV ou PTR.

En variante, ledit au moins un enregistrement comprend en outre un label indiquant si ladite entité cible est configurée pour instancier ledit objet du service réseau ou pour transmettre le descripteur dudit objet à l'entité d'orchestration.

L'invention concerne également un programme d'ordinateur comportant des instructions pour la mise en œuvre du procédé de traitement d'une demande d'instanciation selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement (disque dur, clé USB). D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Le procédé de traitement d'une demande d'instanciation selon l'invention peut donc être mis en œuvre de diverses manières, notamment sous forme câblée ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, décrite ci-dessus, illustre un système de virtualisation des fonctions des réseaux NFV,
- les figures 2A et 2B illustrent le traitement d'une demande d'instanciation d'un service réseau selon l'art antérieur,
- la figure 3 illustre le traitement d'une demande d'instanciation d'un service réseau selon un mode particulier de réalisation de l'invention,
- les figures 4A et 4B illustrent le traitement d'une demande d'instanciation d'un service réseau selon d'autres modes particuliers de réalisation de l'invention,
- la figure 5 illustre un dispositif configuré pour mettre en œuvre le procédé de traitement d'une demande d'instanciation d'un service réseau selon un mode particulier de réalisation de l'invention,
- la figure 6 illustre un serveur DNS (pour Domain Name System en anglais) configuré pour mettre en œuvre le procédé de traitement d'une demande d'instanciation d'un service réseau selon des modes particuliers de réalisation de l'invention.

### 5. Description d'un mode de réalisation de l'invention

### 5.1 Principe général

L'invention vise à modifier les identifiants de fonctions VNF et de services réseau imbriqués Nested-NS référencés par un descripteur de service réseau afin que, lorsqu'un orchestrateur ne dispose pas de l'objet requis (VNF, Nested-NS), il puisse obtenir une information lui permettant d'accéder à cet objet. Autrement dit, le descripteur de service réseau comprend une information permettant à l'orchestrateur d'identifier au moins une entité cible qui est configurée pour instancier l'objet requis sur instruction de l'orchestrateur ou pour transmettre à l'orchestrateur un fichier comprenant un descripteur de l'objet. Par simplicité, par la suite, une telle information est appelée identificateur généralisé.

On appellera par la suite orchestrateur principal un orchestrateur chargé d'instancier un service réseau NS (Network Service) de premier niveau, i.e. le service réseau pour lequel un client envoie une demande d'instanciation. On appellera orchestrateur secondaire un orchestrateur chargé d'instancier des fonctions réseau virtualisées VNFs ou des services réseau imbriqués NS de second niveau (Nested NS), i.e. des fonctions réseau virtualisées VNFs ou des services réseau imbriqués nécessaires à l'instanciation du service réseau de premier niveau.

Selon la terminologie ETSI NFV, l'orchestrateur de premier niveau est un NFVO et l'orchestrateur de second niveau est un autre NFVO ou un VNFM.

Une fois l'entité cible déterminée, l'orchestrateur principal, émet vers celle-ci soit une demande d'instanciation de l'objet, soit une demande de récupération de l'objet.

Lorsque l'orchestrateur principal émet une demande d'instanciation d'objet, cette demande s'applique non seulement dans le cas où un orchestrateur NFVO instruit spécifiquement un VNFM particulier pour instancier un service mais également le cas où un orchestrateur NFVO demande à un autre NFVO l'instanciation d'un service réseau imbriqué (« Nested NS »: un service réseau dont le cycle de vie est géré par le second NFVO pour le compte du premier).

Lorsque l'orchestrateur principal émet une demande de récupération du descripteur, il peut obtenir soit le descripteur de l'objet en lui-même, soit s'il existe un fichier archive comprenant le descripteur de l'objet.

Ces requêtes (demande d'instanciation, demande de récupération) peuvent typiquement être mise en œuvre sous la forme d'APIs REST, telles que celles spécifiées dans les documents ETSI GS NFV-IFA007 ou 013.

Dans le premier cas (demande d'instanciation), l'entité cible joue le rôle d'orchestrateur secondaire.

Dans le second cas (demande de récupération), l'entité cible peut être un orchestrateur secondaire ou un serveur d'hébergement de descripteurs et/ou d'archives logicielles ou un serveur de référencement d'objets (VNF ou Nested-NS). Un serveur de référencement est un intermédiaire qui peut en réponse soit fournir l'identité d'une entité cible capable d'instancier l'objet concerné, soit fournir le fichier archive de la fonction réseau virtualisée désirée (aussi appelé VNF Package dans les spécifications ETSI), ou le fichier archive du service réseau imbriqué désiré (aussi appelé NS Package en anglais, paquet NS en français). Un paquet NS est un fichier archive contenant un descripteur NSD du service réseau ainsi que tout ou partie des paquets VNF référencés par ce descripteur NSD. Lorsque l'orchestrateur principal envoie une demande de récupération du descripteur d'une fonction VNF ou d'un service réseau imbriqué Nested-NS, afin d'instancier lui-même la fonction ou le service réseau imbriqué, il obtient alors un paquet VNF de la fonction ou un paquet NS du service réseau imbriqué.

### 5. 2 Exemples de mise en œuvre

La figure 3 illustre le traitement d'une demande d'instanciation d'un service réseau selon un mode particulier de réalisation de l'invention dans lequel l'identificateur généralisé comprend un identifiant du descripteur de l'objet et un identifiant de l'entité cible sur laquelle le descripteur de l'objet se trouve. Ces 2 identifiants peuvent être séparés ou concaténés.

Selon la figure 3, lors d'une étape E20, une demande d'instanciation d'un service réseau est transmise d'un client vers un orchestrateur NFVOp. Une telle demande d'instanciation comprend un identifiant du descripteur NDS-X du service réseau demandé.

Lors d'une étape E30, l'orchestrateur lit le descripteur NSD-X du service réseau stocké dans sa mémoire pour identifier les objets nécessaire à l'instanciation du service réseau demandé. Par exemple le descripteur NSD-X comprend deux identificateurs généralisés pour un descripteur d'objet VNFD. Par exemple, le descripteur de service réseau comprend les identificateurs généralisés suivants sous une forme dans laquelle les deux identifiants sont concaténés:
nfvol.nfv.orange.com/nsd-123e4567-e89b-12d3-a456-426655440000 nfvcatalogue.orange.com/nsd-123e4567-e89b-12d3-a456-426655440000

Dans cet exemple, le même descripteur d'objet VNFD, identifié ici par « nsd-123e4567-e89b-12d3-a456-426655440000 » est stocké sur deux entités cibles. A titre d'exemple, les deux entités cibles sont ici respectivement un autre orchestrateur NFVO1 identifié par « nfvo1.nfv.orange.com » et un serveur de fichiers incapable d'instancier un service réseau NS ou une fonction réseau virtualisée VNF identifié par « nfvcatalogue.orange.com ».

Lors de l'étape E31, l'orchestrateur NFVOp détecte qu'il ne dispose pas dans sa mémoire du descripteur d'objet VNFD « nsd-123e4567-e89b-12d3-a456-426655440000 ».

Lors d'une étape E32, l'orchestrateur NFVOp obtient alors l'identifiant d'au moins une entité cible sur laquelle le descripteur de l'objet se trouve en lisant dans le descripteur de service réseau NSD-X l'identifiant associé à l'identifiant du descripteur d'objet VNFD.

Lors d'une étape E33, selon une variante, l'orchestrateur NVFOp transmet donc à une des entités cibles une demande d'instanciation de l'objet VNFD « nsd-123e4567-e89b-12d3-a456-426655440000 ». Selon cette variante, et dans l'exemple décrit ici, l'orchestrateur NFVOp envoie sa demande d'instanciation de l'objet VNFD à l'orchestrateur NFVO1.

Selon une autre variante, l'orchestrateur NVFOp instancie lui-même l'objet VNFD. Selon cette variante, l'orchestrateur NVFOp transmet alors au serveur de fichiers identifié par « nfvcatalogue.orange.com » (NFVCAT sur la figure 3) une demande de récupération du paquet VNF comprenant le descripteur de l'objet VNFD qu'il obtient lors de l'étape E34.

Dans le cas d'un déploiement multi-domaines, ce mode particulier de réalisation suppose que le domaine client ait connaissance de la structure du domaine fournisseur. Autrement dit, le client qui envoie une demande d'instanciation d'un service réseau doit avoir connaissance des identités des orchestrateurs et/ou des serveurs d'hébergement ou de référencement du fournisseur du service réseau.

Dans le cas d'un déploiement multi-domaines, le client est un module logiciel appartenant à un domaine distinct du domaine du fournisseur.

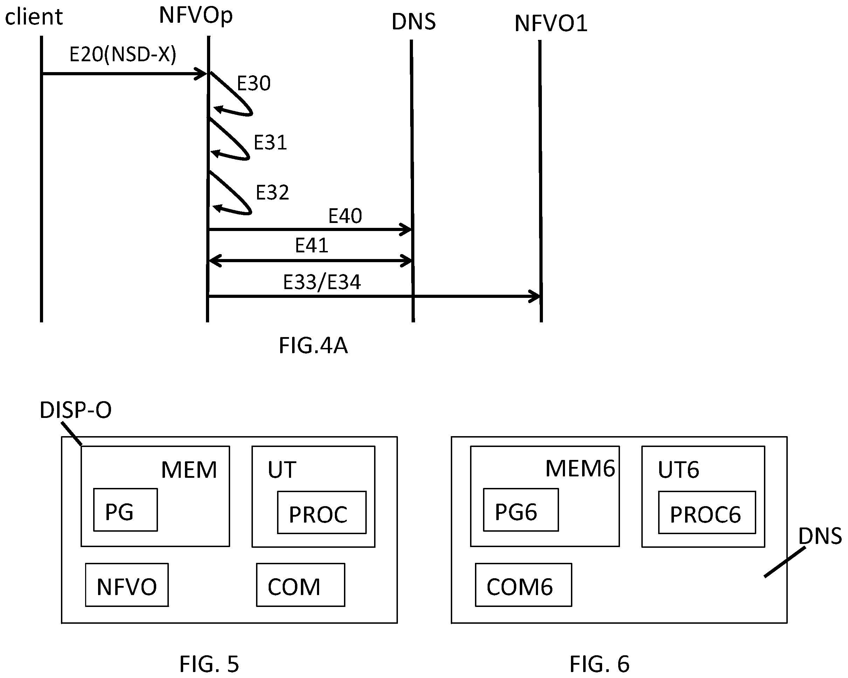

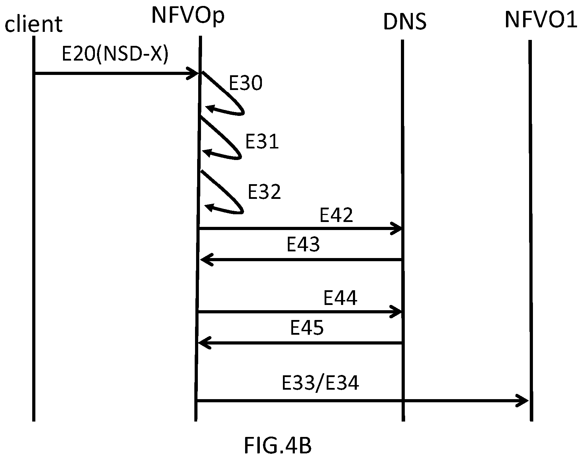

On présente ci-après en relation avec les figures 4A et 4B d'autres modes particuliers de réalisation de l'invention dans lesquels une telle connaissance de la structure du domaine du fournisseur par le client n'est pas nécessaire.

Selon ces autres modes particuliers de réalisation de l'invention, l'identificateur généralisé comprend un identifiant du descripteur de l'objet (par exemple « nsd-123e4567-e89b-12d3-a456-426655440000 » et un identifiant d'un domaine de fonctions de réseaux virtualisées NFV sur lequel l'entité cible se trouve (par exemple "orange.com").

Selon ces autres modes particuliers de réalisation de l'invention, afin d'accéder au descripteur de l'objet, il est alors nécessaire d'obtenir l'adresse de l'entité cible dans le domaine NFV. Pour cela, le mécanisme DNS est utilisé.

Le DNS est à la fois une infrastructure et un protocole de l'Internet communément utilisé pour associer des noms de domaine (exemple.com) à d'autres informations : adresses IP, listes de serveurs ou de services... Différents types d'enregistrement existent, dont les enregistrements SRV (pour Service Ressource Records en anglais) ou PTR (pour Pointer Records en anglais). De tels enregistrements sont hébergés par des serveurs dits autoritaires. On décrit ci-après le contenu des enregistrements SRV et PTR utilisés dans des modes particuliers de réalisation de l'invention décrits en relation avec les figures 4A et 4B.

Dans ces modes particuliers de réalisation de l'invention, les étapes E20, et E30 à E34 sont similaires à celles décrites en relation avec la figure 3.

Lorsque l'orchestrateur NFVOp a détecté qu'il ne dispose pas dans sa mémoire du descripteur d'objet VNFD requis pour l'instanciation du service réseau demandé, il interroge un serveur DNS du domaine de fonctions de réseaux virtualisées NFV dont il a obtenu l'identifiant à partir du descripteur de service réseau NSD-X, pour obtenir le nom d'une entité cible correspondant à ce domaine.

Selon le mode particulier de réalisation décrit en figure 4A, lors d'une étape E40, l'orchestrateur NVFOp interroge le serveur DNS du domaine figurant dans l'identificateur généralisé, sur le service NFV.

Le serveur DNS comprend des enregistrements SRV permettant une simple découverte d'une entité cible au sein du domaine identifié. Le serveur DNS contient par exemple les informations suivantes :
$ORIGIN orange.com.
   _nfv._tcp.orange.com. 3600 IN SRV 0 0 80 serveur-nfv.orange.com. 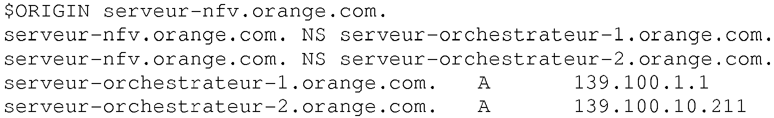
Selon cet exemple:
   - « serveur-nfv.orange.com » est un nom de domaine identifiant de manière générique le « domaine NFV » de l'opérateur orange.com,
   - « serveur-orchestrateur-1.orange.com » et«serveur-orchestrateur-2.orange.com » identifient des serveurs stockant les descripteurs VNFDs.

Ces serveurs peuvent être physiquement adressés par une ou plusieurs adresses IP. Pour simplifier, il a été supposé qu'une seule adresse (IPv4) était fournie pour chacun des deux noms. Le mécanisme est similaire avec plusieurs adresses ou des enregistrements AAAA (IPv6)).

Les enregistrements décrits ci-dessus sont retournés à l'orchestrateur principal NFVOp ensemble ou séquentiellement, lors d'une étape E41.

Par exemple, dans un premier temps, l'orchestrateur principal NFVOp obtient du serveur DNS, l'identifiant « serveur-nfv.orange.com » du domaine NFV du domaine orange.com. Puis, l'orchestrateur principal NFVOp interroge à nouveau le serveur DNS sur l'identifiant « serveur-nfv.orange.com ». Le serveur DNS lui envoie alors les identifiants des serveurs orchestrateurs secondaires 1 et 2 « serveur-orchestrateur-1.orange.com » et « serveur-orchestrateur-2.orange.com ».

L'orchestrateur principal NFVOp sélectionne alors une entité cible parmi les deux orchestrateurs secondaires, par exemple l'orchestrateur secondaire 1 «serveur-orchestrateur-1.orange.com ».

L'orchestrateur principal NFVOp interroge alors le serveur DNS sur l'identifiant de l'orchestrateur secondaire 1 « serveur-orchestrateur-1.orange.com » et obtient en retour l'adresse IP (139.100.1.1) de cet orchestrateur secondaire.

Puis, lors de l'étape E33, l'orchestrateur principal NFVOp transmet à l'orchestrateur secondaire 1, une demande d'instanciation de l'objet dont le descripteur a pour identifiant « *nsd-123e4567-e89b-12d3-a456-426655440000* » ou bien une demande de récupération du descripteur de l'objet « *nsd-123e4567-e89b-12d3-a456-426655440000* ».

Dans l'enregistrement SRV décrit plus haut, les deux valeurs suivant le SRV (ici 0 et 0) peuvent être utilement valorisées pour mettre en place un partage de charge sur plusieurs serveurs d'orchestration. Le premier champ correspond à une priorité associée à un serveur et le second champ à un poids permettant de choisir entre des serveurs de même priorité. En faisant varier ces valeurs, la charge entre les serveurs peut être équilibrée.

Les adresses IP sont retournées dans les champs additionnels DNS.

Selon une variante, différent labels peuvent être utilisés pour différentier les types d'entités cibles disponibles. Par exemple si le domaine cible contient des entités cibles capables de fournir un descripteur et d'autres entités cibles capables d'instancier un objet, les enregistrements SRV du serveur DNS seront de la forme
$ORIGIN orange.com.
_desc._nfv._tcp.orange.com. 3600 IN SRV 0 0 80 serveur-nfvdesc.orange.com.
_inst._nfv._tcp.orange.com. 3600 IN SRV 0 0 80 serveur-nfvinst.orange.com.

Ainsi, lorsque l'orchestrateur principal NFVOp interroge le serveur DNS sur le service NFV du domaine cible (ici orange.com), il pourra préciser dans son interrogation s'il souhaite obtenir un identifiant d'une entité cible capable de fournir un descripteur ou d'une entité cible capable d'instancier un objet, en utilisant respectivement le préfixe _desc ou _inst dans sa requête d'interrogation.

On décrit maintenant en relation avec la figure 4B un autre mode particulier de réalisation de l'invention dans lequel les fonctionnalités de la découverte de service DNS-SD (DNS Service Discovery en anglais) telle que définie dans la RFC 6763 sont utilisées.

La fonction DNS-SD permet la découverte des services d'orchestration souhaités pour le déploiement du service réseau demandé.

Le serveur DNS du domaine figurant dans l'identificateur généralisé comprend alors les types d'enregistrements suivants:
- des enregistrements PTR pour faire correspondre une liste de type de service avec des instances de services,
- des enregistrements SRV pour associer ces instanciations avec des ports et des noms de serveurs du domaine,
- optionnellement, des enregistrements TXT (texte) pour enrichir la description des services rendus à l'aide d'une description syntaxiquement libre.

La forme générale d'un enregistrement PTR pour la fonctionnalité DNS-SD est la suivante :
Service Instance Name = <Instance>. <Service>. <Domain>

<Service> est formé de deux identifiants _xx: le premier est l'identifiant de service. Par exemple, _nfv pour le service NFV.

Comme pour la première variante, différents identifiants de services peuvent être utilisés s'il est nécessaire de distinguer différents types d'entités disponibles.

Le second identifiant est le protocole sur lequel ce service sera rendu. Par exemple, _tcp, si on suppose que le service NFV est accessible avec le protocole HTTP.

<Instance> est formé de l'identifiant du descripteur de l'objet NFV concerné. En reprenant l'exemple décrit plus haut, l'identifiant nsd-123e4567-e89b-12d3-a456-426655440000 de l'objet requis est affiché dans l'enregistrement PTR.

<Instance> n'est syntaxiquement contraint que par sa longueur et n'exige d'être unique qu'au sein du domaine considéré.

Par exemple, le serveur DNS comprend les enregistrements PTR suivants :
$ORIGIN orange.com.
_nfv._tcp.orange.com. PTR nsd-123e4567-e89b-12d3-a456-426655440000_nfv_ tcp.serveur-orchestrateur-1.orange.com.
_nfv._tcp.orange.com. PTR nsd-123e4567-e89b-12d3-a456-426655441111_nfv_ tcp.serveur-orchestrateur-1.orange.com.
_nfv._tcp.orange.com. PTR nsd-123e4567-e89b-12d3-a456-426655441111_nfv_ tcp.serveur-orchestrateur-2.orange.com.
_nfv._tcp.orange.com. PTR nsd-123e4567-e89b-12d3-a456-426655442222_nfv_ tcp.serveur-orchestrateur-2.orange.com.
_nfv._tcp.orange.com. PTR nsd-123e4567-e89b-12d3-a456-426655443333_nfv_ tcp.serveur-orchestrateur-2.orange.com.

Le serveur DNS comprend également les enregistrements SRV et TXT suivants: nsd-123e4567-e89b-12d3-a456-426655441111_nfv_tcp.serveur-orchestrateur-1.orange.com. SRV 0 0 80 serveur-orchestrateur-1.orange.com.

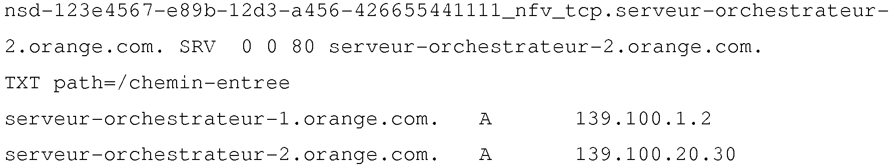

Dans ce mode particulier de réalisation de l'invention, l'orchestrateur principal NFVOp interroge le serveur DNS du domaine figurant dans l'identificateur généralisé (par exemple "orange.com"), sur le service NFV, en utilisant l'identifiant du descripteur de l'objet requis, par exemple nsd-123e4567-e89b-12d3-a456-426655441111.

Lors d'une étape E42, l'orchestrateur principal NFVOp requiert le descripteur nsd-123e4567-e89b-12d3-a456-426655441111_nfv dans le domaine orange.com.

Lors d'une E43, d'après les enregistrements PTR mémorisés dans le serveur DNS, le serveur DNS lui envoie alors les deux enregistrements PTR suivants :
_nfv._tcp.orange.com. PTR nsd-123e4567-e89b-12d3-a456-426655441111_nfv_tcp.serveur-orchestrateur-1.orange.com.
_nfv._tcp.orange.com. PTR nsd-123e4567-e89b-12d3-a456-426655441111_nfv_tcp.serveur-orchestrateur-2.orange.com.

L'orchestrateur principal NFVOp sélectionne alors un des deux serveurs proposés, par exemple l'orchestrateur secondaire serveur-orchestrateur-1.orange.com.

Lors d'une étape E44, l'orchestrateur principal NFVOp interroge le serveur DNS sur la ressource nsd-123e4567-e89b-12d3-a456-426655441111_nfv_ tcp.serveur-orchestrateur-1.orange.com.

Lors d'une étape E45, le serveur DNS lui transmet alors les enregistrements SRV et TXT mémorisés pour cette ressource.

L'orchestrateur principal NFVOp obtient alors les enregistrements suivants:

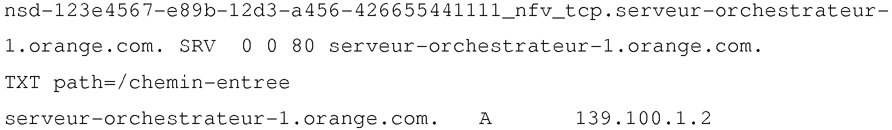

L'orchestrateur principal NFVOp obtient ainsi l'adresse IP de l'orchestrateur secondaire serveur-orchestrateur-1.orange.com.

Selon une variante, l'enregistrement TXT « path = » mémorisé par le serveur DNS peut être utilisé pour préciser le chemin à utiliser dans l'URI HTTP pour accéder à l'objet concerné.

Dans une variante de réalisation, un enregistrement TXT supplémentaire peut être valorisé pour indiquer à l'orchestrateur principal NFVOp les exigences de licences ou la version pour chacun des paquets VNF ou NS requis. Par exemple, un tel enregistrement TXT peut être de la forme TXT version=1.2.3.4.5.

De manière similaire au mode particulier de réalisation décrit en relation avec la figure 4A, les enregistrements PTR ou SRV selon le mode particulier de réalisation décrit ici peuvent comprendre un label indiquant si l'entité cible est configurée pour instancier ledit objet du service réseau ou pour transmettre le descripteur dudit objet à l'entité d'orchestration.

De manière similaire aux modes particuliers de réalisation décrits précédemment, lors d'une étape E33, l'orchestrateur principal NFVOp envoie une demande d'instanciation ou une demande de récupération à l'entité cible.

Les modes de réalisation décrits précédemment s'applique de manière similaire lorsque l'objet requis par le service réseau demandé est un service réseau imbriqué Nested NS. Lorsque l'orchestrateur principal NFVOp récupère le descripteur Nested NSD du service réseau imbriqué, il se peut que le descripteur Nested NSD récupéré référence lui-même des objets dont l'orchestrateur principal NFVOp ne dispose pas.

Selon une variante, l'entité cible ayant fournit le descripteur Nested NSD, par exemple un orchestrateur secondaire, fournit également à l'orchestrateur principal NFVOp les objets référencés dans ce descripteur Nested NSD.

Lorsque l'orchestrateur secondaire ne dispose pas des objets référencés dans ce descripteur Nested NSD, l'orchestrateur secondaire met alors en œuvre au moins les étapes E31 et E33 décrites précédemment selon l'un quelconques de modes particuliers de réalisation de l'invention, afin d'obtenir pour chaque objet référencé non disponible un fichier comprenant un descripteur de cet objet.

Lors d'une étape E31, l'orchestrateur secondaire obtient, à partir du descripteur du service réseau imbriqué, une information permettant d'identifier au moins une entité cible configurée pour transmettre le descripteur d'un objet non disponible référencé dans le descripteur du service réseau imbriqué, à l'orchestrateur secondaire.

Lors d'une étape E33, l'orchestrateur secondaire transmet à une desdites au moins une entité cible une demande de récupération d'un fichier comprenant un descripteur de l'objet non disponible et transmet ce fichier à l'orchestrateur principal NFVOp.

On comprend bien entendu que le mécanisme de récupération d'un fichier comprenant un descripteur de l'objet non disponible peut être mis en œuvre de manière récursive, par les différents entités cibles auxquelles un tel fichier est demandé lorsque ce fichier comprend un descripteur d'un service réseau imbriqué et que ces entités cibles ne disposent pas des objets référencés dans un tel descripteur.

Selon une autre variante, l'orchestrateur principal NFVOp récupère lui-même les objets référencés dans un descripteur de service réseau imbriqué et dont il ne dispose pas. Pour cela, l'orchestrateur principal NFVOp met en œuvre au moins les étapes E31 et E33 décrites précédemment selon l'un quelconques de modes particuliers de réalisation de l'invention pour obtenir pour chaque objet référencé non disponible un fichier comprenant un descripteur de cet objet auprès de l'entité cible.

La figure 5 illustre un dispositif d'orchestration configuré pour mettre en œuvre le procédé de traitement d'une demande d'instanciation d'un service réseau selon l'un quelconque des modes particuliers de réalisation de l'invention.

Un tel dispositif d'orchestration comprend notamment une entité d'orchestration (NFVO) configuré pour mettre en œuvre tout ou partie d'un service de fonctions réseau virtualisées. Le dispositif d'orchestration comprend un récepteur (COM) d'une requête d'instanciation d'un service réseau, et une mémoire (MEM) mémorisant un descripteur dudit service réseau, ledit descripteur du service réseau comprenant au moins une référence à un objet à déployer pour instancier ledit service réseau, le dispositif d'orchestration comprend une unité de traitement (UT) configurée pour:
- lorsque ledit descripteur de l'objet n'est pas disponible au niveau de l'entité d'orchestration (NFVO), obtenir, à partir du descripteur du service réseau, une information permettant d'identifier au moins une entité cible configurée pour instancier ledit objet sur instruction de l'entité d'orchestration (NFVO) ou transmettre le descripteur dudit objet à l'entité d'orchestration (NFVO),
- et transmettre à une desdites au moins une entité cible une demande d'instanciation dudit objet ou une demande de récupération du descripteur dudit objet.

Selon un mode particulier de réalisation de l'invention, les étapes du procédé de traitement d'une demande d'instanciation d'un service réseau sont mises en œuvre par des instructions d'un programme d'ordinateur PG.

L'unité de traitement UT du dispositif d'orchestration est équipée par exemple d'un processeur PROC, et pilotée par le programme d'ordinateur PG stocké en mémoire MEM. Le programme d'ordinateur PG comprend des instructions pour mettre en œuvre les étapes du procédé de traitement de données tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de traitement de données selon l'un quelconque des modes particuliers de réalisation décrits en relation avec les figures 3, 4A ou 4B selon les instructions du programme d'ordinateur PG.

Selon un mode particulier de réalisation de l'invention, le dispositif d'orchestration est compris dans un serveur.

La figure 6 illustre un serveur DNS configuré pour mettre en œuvre des étapes du procédé de traitement d'une demande d'instanciation d'un service réseau selon l'un quelconque des modes particuliers de réalisation de l'invention décrits en relation avec les figures 4A ou 4B.

Le serveur DNS comprend une mémoire MEM6, une unité de traitement UT6, équipée par exemple d'un processeur PROC6, et pilotée par le programme d'ordinateur PG6 stocké en mémoire MEM6. Le programme d'ordinateur PG6 comprend des instructions pour mettre en œuvre des étapes du procédé de traitement de données tel que décrit précédemment, lorsque le programme est exécuté par le processeur PROC6. Le serveur DNS comprend également un émetteur/récepteur COM6 configuré pour recevoir des requêtes d'interrogation et envoyer des enregistrements SRV, PTR et/ou TXT.

A l'initialisation, les instructions de code du programme d'ordinateur PG6 sont par exemple chargées dans une mémoire avant d'être exécutées par le processeur PROC6.

La mémoire du serveur DNS comprend notamment au moins un enregistrement associant un identifiant d'un domaine de fonctions de réseaux virtualisées à au moins une entité cible du domaine de fonctions de réseaux virtualisées, ladite entité cible étant configurée pour instancier un objet d'un service réseau sur instruction d'une entité d'orchestration ou transmettre un descripteur dudit objet à l'entité d'orchestration.

Selon un mode particulier de réalisation de l'invention, le ou les enregistrements du serveur DNS pour mettre en œuvre des étapes du procédé de traitement d'une demande d'instanciation d'un service réseau sont de type SRV ou PTR.

Selon un autre mode particulier de réalisation de l'invention, le ou les enregistrements du serveur DNS pour mettre en œuvre des étapes du procédé de traitement d'une demande d'instanciation d'un service réseau comprennent en outre un label indiquant si ladite entité cible est configurée pour instancier ledit objet du service réseau ou pour transmettre le descripteur dudit objet à l'entité d'orchestration.

## Revendications

1. Procédé de traitement d'une requête (E20) d'instanciation d'un service réseau,
un descripteur (NSD-X) dudit service réseau comprenant au moins une référence à un objet à déployer pour instancier ledit service réseau,
le procédé de traitement, mis en œuvre par une entité d'orchestration (NFVOp) mettant en œuvre tout ou partie d'un service de fonctions réseau virtualisées, comprenant, lorsqu'un descripteur de l'objet n'est pas disponible (E30) au niveau de l'entité d'orchestration (NFVOp),
- l'obtention (E31), à partir du descripteur du service réseau (NSD-X), d'une information permettant d'identifier au moins une entité cible configurée pour instancier ledit objet sur instruction de l'entité d'orchestration ou pour transmettre le descripteur dudit objet à l'entité d'orchestration, ladite information comprenant un identifiant du descripteur de l'objet et un identifiant d'un domaine de fonctions de réseaux virtualisées sur lequel ladite entité cible se trouve,
- l'envoi, à destination d'un serveur de nom identifié au moyen dudit identifiant du domaine de fonctions de réseaux virtualisées sur lequel ladite entité cible se trouve, d'une requête d'interrogation comprenant ledit identifiant du descripteur de l'objet et un préfixe indiquant s'il est souhaité obtenir un identifiant d'une entité cible capable de fournir le descripteur de l'objet ou un identifiant d'une entité cible capable d'instancier ledit objet,
- la réception d'au moins une réponse comprenant un identifiant d'une entité cible configurée pour instancier ledit objet sur instruction de l'entité d'orchestration ou pour transmettre le descripteur dudit objet à l'entité d'orchestration,
- la transmission (E33), par l'entité d'orchestration, à une desdites au moins une entité cible d'une demande d'instanciation dudit objet lorsque l'information permet d'identifier au moins une entité cible configurée pour instancier ledit objet ou d'une demande de récupération d'un fichier comprenant ledit descripteur dudit objet lorsque l'information permet d'identifier au moins une entité cible configurée pour transmettre le descripteur dudit objet à l'entité d'orchestration.

2. Procédé selon la revendication 1, dans lequel la requête d'interrogation comprend en outre l'identifiant du descripteur d'objet.

3. Dispositif d'orchestration configuré pour mettre en œuvre tout ou partie d'un service de fonctions réseau virtualisées par une entité d'orchestration, le dispositif comprenant un récepteur d'une requête d'instanciation d'un service réseau, et une mémoire mémorisant un descripteur dudit service réseau, ledit descripteur du service réseau comprenant au moins une référence à un objet à déployer pour instancier ledit service réseau, le dispositif d'orchestration comprenant une unité de traitement configurée pour, lorsque ledit descripteur de l'objet n'est pas disponible au niveau de l'entité d'orchestration:
- obtenir, à partir du descripteur du service réseau, une information permettant d'identifier au moins une entité cible configurée pour instancier ledit objet sur instruction de l'entité d'orchestration ou transmettre le descripteur dudit objet à l'entité d'orchestration, ladite information comprenant un identifiant du descripteur de l'objet et un identifiant d'un domaine de fonctions de réseaux virtualisées sur lequel ladite entité cible se trouve,
- envoyer, à destination d'un serveur de nom du domaine identifié au moyen dudit identifiant du domaine de fonctions de réseaux virtualisées sur lequel ladite entité cible se trouve, une requête d'interrogation comprenant ledit identifiant du descripteur de l'objet, ladite requête d'interrogation comprenant un préfixe indiquant s'il est souhaité obtenir un identifiant d'une entité cible capable de fournir le descripteur de l'objet ou un identifiant d'une entité cible capable d'instancier ledit objet,
- recevoir au moins une réponse comprenant un identifiant d'une entité cible configurée pour instancier ledit objet sur instruction de l'entité d'orchestration ou pour transmettre le descripteur dudit objet à l'entité d'orchestration,
- et transmettre, par l'entité d'orchestration, à une desdites au moins une entité cible d'une demande d'instanciation dudit objet lorsque l'information permet d'identifier au moins une entité cible configurée pour instancier ledit objet ou d'une demande de récupération d'un fichier comprenant ledit descripteur dudit objet lorsque l'information permet d'identifier au moins une entité cible configurée pour transmettre le descripteur dudit objet à l'entité d'orchestration.

4. Serveur de résolution de nom d'un domaine de fonctions de réseaux virtualisées, comprenant une mémoire mémorisant au moins un enregistrement associant un identifiant d'un descripteur d'un objet d'un service réseau à au moins un identifiant d'une entité cible, ladite entité cible étant configurée pour instancier ledit objet sur instruction d'une entité d'orchestration ou transmettre un descripteur dudit objet à l'entité d'orchestration,
ledit serveur étant apte à recevoir d'une entité d'orchestration une requête d'interrogation comprenant ledit identifiant du descripteur d'un objet et un préfixe indiquant s'il est souhaité obtenir un identifiant d'une entité cible capable de fournir le descripteur de l'objet ou un identifiant d'une entité cible capable d'instancier ledit objet et délivrant à ladite entité d'orchestration un identifiant d'une entité cible capable de fournir le descripteur de l'objet ou un identifiant d'une entité cible capable d'instancier ledit objet en fonction dudit préfixe.

5. Serveur de résolution de nom selon la revendication 4, dans lequel ledit au moins un enregistrement est de type SRV ou PTR.

6. Serveur de résolution de nom selon la revendication 4 ou 5, dans lequel ledit au moins un enregistrement comprend un label indiquant si ladite entité cible est configurée pour instancier ledit objet du service réseau ou pour transmettre le descripteur dudit objet à l'entité d'orchestration.

7. Programme d'ordinateur comportant des instructions pour la mise en œuvre du procédé de traitement selon l'une quelconque des revendications 1 ou 2, lorsque ledit programme est exécuté par un processeur.

## Patentansprüche

1. Verfahren zur Verarbeitung einer Anforderung (E20) zur Instanziierung eines Netzwerkdienstes,
wobei ein Deskriptor (NSD-X) des Netzwerkdienstes mindestens einen Verweis auf ein zum Instanziieren des Netzwerkdienstes zu implementierendes Objekt umfasst, wobei das von einer Orchestrierungsentität (NFVOp) ausgeführte Verarbeitungsverfahren den gesamten oder einen Teil eines Dienstes von virtualisierten Netzwerkfunktionen ausführt, umfassend, wenn ein Deskriptor des Objekts auf Ebene der Orchestrierungsentität (NFVOp) nicht verfügbar ist (E30),
- das Erhalten (E31), ausgehend von dem Deskriptor des Netzwerkdienstes (NSD-X), einer Information, die es ermöglicht, mindestens eine Zielentität zu identifizieren, die dazu ausgestaltet ist, das Objekt auf Anweisung der Orchestrierungsentität zu instanziieren oder den Deskriptor des Objekts an die Orchestrierungsentität zu übermitteln, wobei die Information eine Kennung des Deskriptors des Objekts und eine Kennung einer Domain von virtualisierten Netzwerkfunktionen, auf der sich die Zielentität befindet, umfasst,
- das Senden, an einen mittels der Kennung der Domäne von virtualisierten Netzwerkfunktionen, auf der sich die Zielentität befindet, identifizierten Namensserver, einer Abfrageanforderung, umfassend die Kennung des Deskriptors des Objekt und ein Präfix, das angibt, ob eine Kennung einer Zielentität erhalten werden soll, die in der Lage ist, den Deskriptor des Objekts bereitzustellen, oder eine Kennung einer Zielentität, die in der Lage ist, das Objekt zu instanziieren,
- das Empfangen mindestens einer Antwort, die eine Kennung einer Zielentität umfasst, die dazu ausgestaltet ist, das Objekt auf Anweisung der Orchestrierungsentität zu instanziieren oder den Deskriptor des Objekts an die Orchestrierungsentität zu übermitteln,
- das Übermitteln (E33), durch die Orchestrierungsentität, einer Anfrage zur Instanziierung des Objekts an eine der mindestens einen Zielentität, wenn die Information es ermöglicht, mindestens eine Zielentität zu identifizieren, die dazu ausgestaltet ist, das Objekt zu instanziieren, oder einer Anforderung zur Wiedererlangung einer Datei, die den Deskriptor des Objekts umfasst, wenn die Information es ermöglicht, mindestens eine Zielidentität zu identifizieren, die dazu ausgestaltet ist, den Deskriptor des Objekts an die Orchestrierungsentität zu übermitteln.

2. Verfahren nach Anspruch 1, wobei die Abfrageanforderung ferner die Kennung des Objektdeskriptors umfasst.

3. Orchestrierungsvorrichtung, die dazu ausgestaltet ist, den gesamten oder einen Teil eines Dienstes von virtualisierten Netzwerkfunktionen durch eine Orchestrierungsentität auszuführen, die Vorrichtung umfassend einen Empfänger einer Anforderung zur Instanziierung eines Netzwerkdienstes und einen Speicher, der einen Deskriptor des Netzwerkdienstes speichert, wobei der Deskriptor des Netzwerkdienstes mindestens einen Verweis auf ein zum Instanziieren des Netzwerkdienstes zu implementierendes Objekt umfasst, wobei die Orchestrierungsentität eine Verarbeitungseinheit umfasst, die dazu ausgestaltet ist, wenn der Deskriptor des Objekts auf Ebene der Orchestrierungsentität nicht verfügbar ist:
- ausgehend von dem Deskriptor des Netzwerkdienstes eine Information zu erhalten, die es ermöglicht, mindestens eine Zielentität zu identifizieren, die dazu ausgestaltet ist, das Objekt auf Anweisung der Orchestrierungsentität zu instanziieren oder den Deskriptor des Objekts an die Orchestrierungsentität zu übermitteln, wobei die Information eine Kennung des Deskriptors des Objekts und eine Kennung einer Domain von virtualisierten Netzwerkfunktionen, auf der sich die Zielentität befindet, umfasst,
- an einen mittels der Kennung der Domain von virtualisierten Netzwerkfunktionen, auf der sich die Zielentität befindet, identifizierten Namensserver eine Abfrageanforderung zu senden, die die Kennung des Deskriptors des Objekt umfasst, wobei die Abfrageanforderung ein Präfix umfasst, das angibt, ob eine Kennung einer Zielentität erhalten werden soll, die in der Lage ist, den Deskriptor des Objekts bereitzustellen, oder eine Kennung einer Zielentität, die in der Lage ist, das Objekt zu instanziieren,
- mindestens eine Antwort zu empfangen, die eine Kennung einer Zielentität umfasst, die dazu ausgestaltet ist, das Objekt auf Anweisung der Orchestrierungsentität zu instanziieren oder den Deskriptor des Objekts an die Orchestrierungsentität zu übermitteln,
- und, durch die Orchestrierungsentität, an eine der mindestens einen Zielentität eine Anfrage zur Instanziierung des Objekts zu übermitteln, wenn die Information es ermöglicht, mindestens eine Zielentität zu identifizieren, die dazu ausgestaltet ist, das Objekt zu instanziieren, oder einer Anfrage zur Wiedererlangung einer Datei, die den Deskriptor des Objekts umfasst, wenn die Information es ermöglicht, mindestens eine Zielidentität zu identifizieren, die dazu ausgestaltet ist, den Deskriptor des Objekts an die Orchestrierungsentität zu übermitteln.

4. Namensauflösungsserver einer Domain von virtualisierten Netzwerkfunktionen, umfassend einen Speicher, der mindestens einen Datensatz speichert, der eine Kennung eines Deskriptors eines Objekts eines Netzwerkdienstes mindestens einer Kennung einer Zielentität zuordnet, wobei die Zielentität dazu ausgestaltet ist, das Objekt auf Anweisung einer Orchestrierungsentität zu instanziieren oder einen Deskriptor des Objekts an die Orchestrierungsentität zu übermitteln,
wobei der Server fähig ist, von einer Orchestrierungsentität eine Abfrageanforderung zu empfangen, die die Kennung des Deskriptors eines Objekts umfasst, und ein Präfix angibt, ob eine Kennung einer Zielentität erhalten werden soll, die in der Lage ist, den Deskriptor des Objekts bereitzustellen, oder eine Kennung einer Zielentität, die in der Lage ist, das Objekt zu instanziieren, und an die Orchestrierungsentität eine Kennung einer Zielentität ausgibt, die in der Lage ist, den Deskriptor des Objekts bereitzustellen, oder eine Kennung einer Zielentität, die in der Lage ist, das Objekt in Abhängigkeit von dem Präfix zu instanziieren.

5. Namensauflösungsserver nach Anspruch 4, wobei der mindestens eine Datensatz vom Typ SRV oder PTR ist.

6. Namensauflösungsserver nach Anspruch 4 oder 5, wobei der mindestens eine Datensatz ein Label umfasst, das angibt, ob die Zielentität dazu ausgestaltet ist, das Objekt des Netzwerkdienstes zu instanziieren oder den Deskriptor des Objekts an die Orchestrierungsentität zu übermitteln.

7. Computerprogramm mit Anweisungen, die bei der Ausführung des Programms durch einen Prozessor das Verarbeitungsverfahrens nach einem der Ansprüche 1 oder 2 ausführen.

## Claims

1. Method for processing a request (E20) to instantiate a network service,
a descriptor (NSD-X) of said network service comprising at least one reference to an object to be deployed in order to instantiate said network service,
the processing method, implemented by an orchestration entity (NFVOp) implementing all or part of a virtual network function service, comprising, when a descriptor of the object is not available (E30) at the orchestration entity (NFVOp),
- obtaining (E31), on the basis of the descriptor of the network service (NSD-X), information which makes it possible to identify at least one target entity configured to instantiate said object on instruction from the orchestration entity or to transmit the descriptor of said object to the orchestration entity, said information comprising an identifier of the descriptor of the object and an identifier of a virtual network function domain in which said target entity is located,
- sending, to a name server identified by means of said identifier of the virtual network function domain in which said target entity is located, a query request comprising said identifier of the descriptor of the object and a prefix indicating whether it is desired to obtain an identifier of a target entity which is capable of providing the descriptor of the object or an identifier of a target entity which is capable of instantiating said object,
- receiving at least one response comprising an identifier of a target entity configured to instantiate said object on instruction from the orchestration entity or to transmit the descriptor of said object to the orchestration entity,
- the orchestration entity transmitting (E33), to one of said at least one target entity, a request to instantiate said object when the information makes it possible to identify at least one target entity configured to instantiate said object or a request to retrieve a file comprising said descriptor of said object when the information makes it possible to identify at least one target entity configured to transmit the descriptor of said object to the orchestration entity.

2. Method according to Claim 1, wherein the query request further comprises the identifier of the object descriptor.

3. Orchestration device configured to implement all or part of a virtual network function service by means of an orchestration entity, the device comprising a receiver of a request to instantiate a network service, and a memory storing a descriptor of said network service, said descriptor of the network service comprising at least one reference to an object to be deployed in order to instantiate said network service, the orchestration device comprising a processing unit configured to, when said descriptor of the object is not available at the orchestration entity:
- obtain, on the basis of the descriptor of the network service, information which makes it possible to identify at least one target entity configured to instantiate said object on instruction from the orchestration entity or transmit the descriptor of said object to the orchestration entity, said information comprising an identifier of the descriptor of the object and an identifier of a virtual network function domain in which said target entity is located,
- send, to a name server of the domain identified by means of said identifier of the virtual network function domain in which said target entity is located, a query request comprising said identifier of the descriptor of the object, said query request comprising a prefix indicating whether it is desired to obtain an identifier of a target entity which is capable of providing the descriptor of the object or an identifier of a target entity which is capable of instantiating said object,
- receive at least one response comprising an identifier of a target entity configured to instantiate said object on instruction from the orchestration entity or to transmit the descriptor of said object to the orchestration entity,
- and the orchestration entity being configured to transmit, to one of said at least one target entity, a request to instantiate said object when the information makes it possible to identify at least one target entity configured to instantiate said object or a request to retrieve a file comprising said descriptor of said object when the information makes it possible to identify at least one target entity configured to transmit the descriptor of said object to the orchestration entity.

4. Name resolution server of a virtual network function domain, comprising a memory storing at least one record associating an identifier of a descriptor of an object of a network service with at least one identifier of a target entity, said target entity being configured to instantiate said object on instruction from an orchestration entity or transmit a descriptor of said object to the orchestration entity,
said server being able to receive, from an orchestration entity, a query request comprising said identifier of the descriptor of an object, and a prefix indicating whether it is desired to obtain an identifier of a target entity which is capable of providing the descriptor of the object or an identifier of a target entity which is capable of instantiating said object and delivering, to said orchestration entity, an identifier of a target entity which is capable of providing the descriptor of the object or an identifier of a target entity which is capable of instantiating said object in accordance with said prefix.

5. Name resolution server according to Claim 4, wherein said at least one record is SRV or PTR.

6. Name resolution server according to Claim 4 or 5, wherein said at least one record comprises a label indicating whether said target entity is configured to instantiate said object of the network service or to transmit the descriptor of said object to the orchestration entity.

7. Computer program comprising instructions for implementing the processing method according to either one of Claims 1 and 2, when said program is executed by a processor.
